(19) Europäisches Patentamt
European Patent Office
Office européen des brevets

(11) **EP 0 842 304 B1**

(12) **FASCICULE DE BREVET EUROPEEN**

(45) Date de publication et mention
de la délivrance du brevet:
**21.04.1999 Bulletin 1999/16**

(51) Int Cl.⁶: **C22B 7/00**, C22B 23/00,
C22B 59/00, H01M 10/54,
H01M 10/34, H01M 6/52

(21) Numéro de dépôt: **96926454.8**

(22) Date de dépôt: **24.07.1996**

(86) Numéro de dépôt international:
**PCT/FR96/01164**

(87) Numéro de publication internationale:
**WO 97/05293 (13.02.1997 Gazette 1997/08)**

(54) **PROCEDE DE TRAITEMENT DE DECHETS CONTENANT UN OU DES ALLIAGES HYDRURABLES EN VUE DE LEUR RECYCLAGE**

VERFAHRUNG ZUR AUFARBEITUNG VON HYDRIERBARE METALLLEGIERUNGEN ENTHALTENDEN ABFÄLLEN ZU DEREN WIEDERVERWERTUNG

METHOD FOR PROCESSING SCRAP CONTAINING ONE OR MORE ALLOYS THAT REACT TO FORM HYDRIDES, TO ENABLE RECYCLING THEREOF

(84) Etats contractants désignés:
**AT BE CH DE DK FI FR GB IT LI NL SE**

(30) Priorité: **26.07.1995 FR 9509196**

(43) Date de publication de la demande:
**20.05.1998 Bulletin 1998/21**

(73) Titulaire: **Societe Nouvelle d'Affinage des Metaux SNAM
12110 Aubin (FR)**

(72) Inventeurs:
• **TRAVERSE, Jean-Pierre
décédé (FR)**
• **BRESSOLLES, Jean-Claude
F-81370 Saint-Sulpice (FR)**
• **ARCHIER, Patrick
F-12300 Bouillac (FR)**

(74) Mandataire:
**Cabinet BARRE LAFORGUE & associés
95, rue des Amidonniers
31000 Toulouse (FR)**

(56) Documents cités:
**EP-A- 0 585 701          EP-A- 0 649 912
US-A- 5 429 887**

• **DATABASE WPI Section Ch, Week 9609 Derwent Publications Ltd., London, GB; Class L03, AN 96-083979 XP002000446 & JP,A,07 335 276 (AGENCY OF IND SCIENCE & TECHNOL) , 22 Décembre 1995**
• **PATENT ABSTRACTS OF JAPAN vol. 17, no. 171 (C-1044), 2 Avril 1993 & JP,A,04 331000 (KUBOTA CORP), 18 Décembre 1992,**
• **JOM, vol. 45, no. 5, Mai 1993, WARRENDALE, USA, pages 32-35, XP000368623 LYMAN JANE W. ET AL.: "Investigating the Recycling of Nickel Hydride Battery Scrap"**

**Description**

L'invention concerne un procédé de traitement de déchets contenant un ou des alliages hydrurables en vue de leur recyclage. Elle s'applique tout particulièrement au traitement des déchets de batteries du type nickel/hydrures métalliques.

On sait que les batteries nickel/hydrures métalliques présentent des avantages importants par rapport aux batteries acides au plomb ou aux batteries nickel/cadmium : compacité, durée de vie supérieure, densité d'énergie supérieure. Les réactions de charge et de décharge de ces batteries nickel/hydrures sont liées à une transition à l'état solide d'un composé du type $LaNi_5$, $TiNi_2$ ... (certains éléments pouvant être substitués, par exemple terre rare substituée par le mischmétal, nickel partiellement substitué par du cobalt, de l'aluminium ou du manganèse...) ; ce type de composé, apte à conduire à une réaction d'hydruration à l'état solide est généralement désigné par l'expression "alliage hydrurable".

La fabrication industrielle de ces batteries produit une proportion importante de déchets, essentiellement à deux niveaux de la chaîne de fabrication : au cours de l'empâtage des supports nickelés au moyen de la pâte d'alliages hydrurables (obtenue à partir d'alliages hydrurables fondus), et au cours du traitement thermique des supports nickelés couverts de pâte ; après séparation du support métallique, on récupère dans les deux cas des déchets contenant des alliages hydrurables. En outre, les électrodes des batteries usagées nickel/hydrures métalliques conduisent également, après séparation du support nickelé, à des déchets contenant des alliages hydrurables. Ces déchets se présentent sous forme d'agglomérats de tailles et formes très diverses, dans lesquels les alliages hydrurables sont fortement liés et imbriqués avec d'autres éléments.

Actuellement, aucun procédé n'existe à la connaissance des inventeurs pour traiter ce type de déchets afin de régénérer les alliages hydrurables qu'ils contiennent et de permettre de les recycler (notamment dans le cycle de fabrication des batteries). Cette régénération et ce recyclage seraient économiquement très intéressants compte tenu du coût de ces alliages et des quantités importantes et croissantes de déchets qui sont produites. Certains procédés chimiques ou électrochimiques permettent de séparer et recueillir les divers éléments métalliques des déchets (nickel, ...), mais aucun ne permet de récupérer les alliages hydrurables eux-mêmes en vue de leur recyclage direct, (US-A-5 429 887, EP-A-0 649 912, EP-A-0 585 701...). Il faut souligner que les éléments métalliques séparés présentent une valeur économique faible (alors que les alliages hydrurables sont des composés de forte valeur) : l'intérêt de ces procédés connus tient donc, non pas dans le fait qu'ils permettent de récupérer des éléments métalliques, mais dans le fait qu'ils permettent d'éliminer des déchets gênants.

L'absence de technique disponible pour récupérer directement les alliages hydrurables des déchets précités peut être expliquée par les deux facteurs suivants :

.  en premier- lieu, dans ces déchets, les alliages hydrurables sont fortement liés et imbriqués à d'autres éléments (organiques et minéraux) de sorte que leur extraction est difficile et paraît relever de techniques de traitement puissantes,

.  de plus, les alliages hydrurables sont des produits très réactifs, ayant une grande affinité avec beaucoup de corps (oxygène, eau...) et ne peuvent être soumis à des traitements sévères sous peine de dégradation.

Dans ces conditions, un problème non résolu se pose à l'heure actuelle pour extraire les alliages hydrurables des déchets sus-évoqués afin de les rendre directement recyclables, et ce, sans les dégrader ou sans les dégrader notablement.

La présente invention se propose de fournir une solution satisfaisante à ce problème. Son objectif est de fournir un procédé de traitement de déchets contenant des alliages hydrurables, en particulier déchets provenant de la fabrication de batteries de type nickel/hydrures métalliques ou provenant de batteries usagées du même type, ledit procédé permettant de récupérer ces alliages hydrurables sous une forme directement recyclable.

Par "déchets contenant des alliages hydrurables", on entend des déchets se présentant sous forme d'agglomérats préalablement séparés du support métallique et contenant des composés aptes à conduire à une réaction d'hydruration à l'état solide.

Par "batterie nickel/hydrures métalliques", on entend tout élément de stockage électrique dans lequel les réactions de charge et de décharge sont liées à une transition à l'état solide d'un alliage hydrurable ou d'un hydrure métallique.

Le procédé de traitement conforme à l'invention se caractérise en ce qu'il combine :

(a) une étape de pulvérisation des déchets dans un milieu aqueux tensioactif, consistant :

.  à mélanger les déchets avec de l'eau en présence d'au moins un tensioactif,

.  à soumettre la suspension obtenue à une action de détexturation et dispersion, en l'amenant à passer entre deux pièces contiguës en mouvement relatif de rotation l'une par rapport à l'autre, lesdites pièces étant pourvues de fentes de passage de la suspension,

(b) une étape de sédimentation de la suspension issue de l'étape (a) pour en séparer la phase solide,

(c) des cycles successifs d'agitation et de sédimentation, chaque cycle consistant :

. à mélanger la phase solide particulaire issue de l'étape de sédimentation (b) ou de l'étape de sédimentation du cycle précédent, avec de l'eau en présence d'au moins un tensioactif,
. à soumettre la suspension obtenue à une agitation du milieu,
. à laisser sédimenter la suspension obtenue et à en séparer la phase solide particulaire,

(d) une étape finale de lavages à l'eau et de séchage de la phase solide particulaire issue des cycles (c).

Les expérimentations ont mis en évidence que la combinaison des opérations sus-définies mises en oeuvre en milieu aqueux tensioactif (pulvérisation/sédimentation/cycles répétés d'agitation et sédimentation) permet de récupérer, à partir des déchets précités, des alliages hydrurables de bonne qualité, sans dégradation notable, bénéficiant de capacités électrochimiques du même ordre de grandeur que celles d'alliages vierges (pour des régimes d'utilisation normale des batteries). La progressivité des traitements mis en oeuvre et la nature de ces traitements permettent ainsi de concilier les exigences apparemment contradictoires qu'implique le problème de récupération des alliages hydrurables des déchets de batteries nickel/hydrures.

Selon un mode de mise en oeuvre préférentiel, l'action de détexturation et dispersion est réalisée en amenant la suspension à passer, pendant une durée comprise entre 1 minute et 10 minutes, entre deux pièces en rotation relative l'une par rapport à l'autre telle que la vitesse linéaire relative de l'une par rapport à l'autre soit comprise entre 5 m/s et 15 m/s. La suspension peut en particulier être aspirée dans un rotor tournant et refoulé dans le sens centrifuge à travers les fentes d'un stator périphérique.

Au cours de cette opération, le rapport pondéral matière solide/phase liquide est avantageusement ajusté à une valeur comprise entre 0,1 et 1. Compte-tenu de l'affinité des alliages hydrurables avec l'oxygène dissous dans l'eau, cette plage paraît correspondre à un bon compromis détexturation/dégradation : la détexturation est quasiment complète et permet de séparer les composés organiques (en particulier les filaments en polytétrafluoroéthylène : PTFE) dans lesquels sont imbriqués les alliages hydrurables, tout en limitant la dégradation de ces alliages à des valeurs faibles (dégradation inférieure à quelques pour cent).

Le rapport pondéral tensioactif/déchets est avantageusement ajusté à une valeur comprise entre $10^{-4}$ et $5.10^{-3}$. Cette plage de valeur permet de supprimer les problèmes d'hydrophobie qu'entraîne la nature des composés présents, tout en évitant la formation de mousse susceptible de rendre la mise en oeuvre du procédé impraticable.

Les mêmes plages de valeurs des rapports matière solide/phase liquide (0,1 à 1) et tensioactif/phase solide ($10^{-4}$ à $5.10^{-3}$) peuvent être choisies pour chacun des cycles d'agitation pour des raisons similaires à celles indiquées.

Au cours de chacun de ces cycles, l'agitation du milieu, notamment agitation mécanique, peut être combinée à une vibration ultrasonore transmise à la suspension, en particulier lorsque les déchets traités contiennent un pourcentage notable de graphite finement divisé qui présente une très forte adhésion avec les particules d'alliage hydrurable. Une mise en vibration ultrasonore de la suspension favorise le détachement des composés minéraux (notamment le graphite) qui sont ensuite séparés lors des sédimentations.

Selon un mode de mise en oeuvre préféré, à chaque cycle, la suspension est soumise, pendant une durée sensiblement comprise entre 1 minute et 10 minutes, à une vibration ultrasonore telle que la densité énergétique moyenne au coeur de la suspension soit sensiblement comprise entre 10 et 20 W.l$^{-1}$. Ce mode de mise en oeuvre paraît constituer un bon compromis pour éliminer les composés minéraux (en particulier le graphite) qui polluent les particules d'alliages hydrurables sans conduire à une dégradation sensible de ces alliages.

La fréquence de la vibration ultrasonore à laquelle est soumise la suspension à chaque cycle est de préférence comprise entre 30 et 60 kilohertz. Cette vibration est combinée à une agitation du milieu qui peut être une agitation mécanique réalisée par tout moyen connu propre à engendrer un brassage d'homogénéisation du milieu.

Le nombre de cycles successifs d'agitation (éventuellement combinée à une vibration ultrasonore) et de sédimentation auxquels est soumis la suspension est de préférence sensiblement compris entre 10 et 30. Le traitement présente ainsi un caractère très progressif garantissant une faible dégradation globale des alliages (inférieure à 5 %), tout en réalisant une séparation poussée de la pollution minérale (pureté finale des alliages obtenues supérieure à 99,6 % en poids).

Au terme des cycles d'agitation et de sédimentation, la phase solide obtenue est lavée à l'eau et séchée. Plusieurs lavages à l'eau sont de préférence réalisés pour éliminer toutes les particules étrangères qui auraient été séparées par les traitements et non encore éliminées au cours des diverses sédimentations. Au terme de ces lavages, le produit obtenu est de préférence séché en le rinçant au moyen d'un solvant volatile miscible avec l'eau et en assurant une évaporation sous vide du liquide. On minimise ainsi au cours du séchage les réactions parasites des alliages hydrurables, qui seraient susceptibles d'entraîner une certaine dégradation de ces composés.

Le produit obtenu après séchage peut, le cas échéant, être soumis à un tamisage en vue d'en extraire les particules organiques de grosse taille (gangues de taille supérieure ou égale à 150 μm).

Par ailleurs, dans certains cas, en particulier pour des déchets très oxydés provenant de batteries usagées, le procédé est complété en intercalant entre les lavages à l'eau une étape de traitement acide adaptée pour décaper les particules d'alliages en surface. Ce traitement réalise une dépassivation de surface des alliages hydrurables, qui améliore leurs caractéristiques électrochimiques.

La température du milieu au cours des traitements ne paraît pas critique (tout au moins dans la plage des basses températures), et le procédé de l'invention peut être mis en oeuvre à température ambiante ou à une température proche (par exemple entre 5 °C et 50 °C).

Le procédé de l'invention et les performances obtenues sont illustrés par les exemples qui suivent en référence aux dessins annexés. Dans ces exemples, les déchets traités contiennent des alliages dont la composition est du type :

$$LnNi_{5-x}(Co_yAl_zMn_{1-y-z})_x$$

où Ln = La + Ce + Nd + Pr. La composition de ce mélange de terres rares varie d'un alliage à l'autre, de même que les paramètres x, y et z.

Sur les dessins annexés :

- la figure 1 est un diagramme donnant la capacité électrochimique en fonction du nombre de cycle charge/décharge, d'une part, des alliages hydrurables régénérés à l'exemple 1 (courbe A), d'autre part, d'alliages hydrurables vierges (courbe B),
- les figures 2 et 3 sont des diagrammes de répartition granulométrique des alliages hydrurables régénérés à l'exemple 1 (figure 2) et d'alliages hydrurables vierges (figure 3),
- la figure 4 est un diagramme donnant la capacité électrochimique des alliages hydrurables régénérés à l'exemple 2 en fonction du nombre de cycles charge/décharge (diagramme similaire obtenu à l'exemple 3),
- la figure 5 est un diagramme de répartition granulométrique des alliages hydrurables récupérés à l'exemple 2 (diagramme similaire obtenu à l'exemple 3).

EXEMPLE 1 :

Régénération d'un déchet "Saft" :

Le procédé de régénération d'alliage hydrurable est appliqué ici à un déchet de production issu des usines "Saft" (marque déposée) ; ce déchet a subi un stockage de moins de trois mois après sa récupération sur la chaîne de fabrication de batterie. Il est constitué, d'une part, de 97,5 % en poids d'alliage, d'autre part, de liants organiques (essentiellement PTF) et d'une pollution minérale (essentiellement graphite).

La quantité de déchet traitée est de 300 g. Cette matière est déposée dans un bécher de 2 litres à laquelle on ajoute ensuite 900 ml d'eau déminéralisée. Le rapport pondéral solide/liquide est ainsi de 1/3. Le déchet est très hydrophobe et les deux constituants en présence restent bien distincts. On a alors recours à des agents tensio-actifs.

Trois tensio-actifs sont utilisés simultanément :

- "Zonyl" (marque déposée par DU PONT DE NEMOURS) : polymère fluoré non ionique,
- "Mélioran P312" (marque déposée par ATOCHEM) : tension-actif anionique,
- "Cataflot NS100" (marque déposée par ATOCHEM) : tensio-actif cationique.

Les deux derniers agents se présentent sous forme solide. Par commodité, on réalise une mise en solution dans l'eau déminéralisée des trois agents dans les proportions indiquées ci-après. Une quantité donnée de cette solution sera prélevée et ajoutée au déchet chaque fois que l'eau utilisée pour la mise en suspension du déchet est renouvelée. Dans cet exemple, les masses suivantes sont introduites dans une fiole jaugée de 500 ml :

| Zonyl | Mélioran | Cataflot |
|--------|----------|----------|
| 11,25 g | 5,625 g | 5,625 g |

Après dissolution, le volume prélevé pour stabiliser la suspension des 300 g de déchets est de 20 ml. Le rapport pondéral tensio-actif/déchets est alors de $3.10^{-3}$.

Après addition des 20 ml de la solution des tensio-actifs, la détexturation du déchet est obtenue par l'action d'un dispositif de pulvérisation de type "Ultra Turrax T50" (marque déposée par la Société IKA) équipé d'une tête de dispersion "GT50 N 45M". Le dispositif fonctionne sur le principe d'une turbine. Il aspire le liquide de bas en haut et rejette latéralement le produit dispersé à travers les fentes du stator. Au passage dans la tête de dispersion, chaque particule est soumise à des impulsions radiales et tangentielles dues aux transitions dans l'entrefer rotor/stator. On obtient grâce à la turbulence ainsi créée un effet spécifique de détexturation et dispersion fine des déchets.

La tête de dispersion est immergée dans le mélange eau + déchet + tensio-actifs de telle sorte que la distance tête/fond du bécher soit de 1,5 cm environ. La vitesse de rotation de la tête est de 5 000 tr.min⁻¹, ce qui correspond à une vitesse linéaire relative du rotor par rapport au stator de 10,5 m.s⁻¹ . La durée de la détexturation est fixée à 7 min. Au cours de cette étape, le mélange se colore très rapidement en noir. En fin de traitement, l'homégénéiseur est stoppé et la tête retirée et soigneusement rincée à l'eau déminéralisée.

Quelques mousses se forment de temps en temps au cours de la dispersion sans que ce phénomène prenne une ampleur gênante. Elles sont lavées par pulvérisation d'eau déminéralisée à la surface de la suspension.

Les densités des différents constituants de la suspension sont très différentes (alliage hydrurable : d > 8 ; pollution minérale et organique : d ≈ 2,2). La sédimentation qui intervient dès l'arrêt du dispositif de pulvérisation conduit à la formation d'un dépôt détexturé très enrichi en alliage hydrurable. La durée de la sédimentation du dépôt est de 12 min. Cet intervalle de temps correspond à une récupération maximum d'alliage. Au terme de cette sédimentation, le liquide surnageant a conservé sa couleur noire liée à la présence en suspension de la pollution (en particulier du graphite). Ce liquide est évacué au moyen d'une pompe péristaltique. Le dépôt restant au fond du bécher est homogène et complètement désaggloméré. Une grande partie du PTF a été éliminée, mais la teinte sombre du dépôt montre qu'il renferme encore une quantité non négligeable de pollution (graphite). Un objectif de la prochaine étape est l'élimination de cette pollution résiduelle.

Au produit obtenu précédemment, on ajoute 20 ml de la solution des tensio-actifs et 900 ml d'eau déminéralisée. L'ensemble bécher + suspension est placé dans une cuve à ultrasons (f = 50 kHz, 10 W.l$^{-1}$ < w < 15 W.l$^{-1}$). Le premier cycle de traitement ultrasonore de la suspension est effectué durant 5 min. Une agitation manuelle à l'aide d'une baguette de verre permet son homogénéisation durant ce traitement. Le liquide s'obscurcit très rapidement. Ce traitement ne conduit pas à la formation de mousses.

Une sédimentation de 12 min fait suite à ce cycle. Ensuite, on procède au pompage du liquide qui est toujours de couleur noire. A l'opposé, la couleur du dépôt métallique s'éclaircit attestant de l'appauvrissement en graphite.

Le traitement ultrasonore du mélange alliage hydrurable + tensio-actifs + eau est répétée pendant 10 cycles consécutifs selon le même protocole. A chaque cycle, l'eau rejetée perd sa coloration pour devenir quasiment incolore au dernier lavage.

La poudre recueillie est ensuite lavée à l'eau déminéralisée pour éliminer les tensio-actifs. Trois lavages successifs sont effectués en ajoutant 900 ml d'eau et en agitant manuellement le tout durant 1 min. La mise en suspension de particules d'alliage hydrurable dans l'eau pure conduit à la flottation de certaines d'entre elles. On force alors leur sédimentation par pulvérisation d'eau déminéralisée à la surface de la suspension. Après une sédimentation de 12 min, l'eau est évacuée par pompage.

Pour éviter une dégradation ultérieure des particules d'alliages hydrurables, liée à la présence simultanée de l'oxygène de l'air et d'humidité, on a recours à un rinçage de la poudre recueillie dans l'éthanol. Ce solvant présente l'avantage de mouiller parfaitement l'alliage et la propriété d'être complètement miscible à l'eau. On réalise deux rinçages successifs en ajoutant 200 ml d'éthanol et en agitant manuellement durant 1 min.

L'alliage régénéré est récupéré sur un filtre papier préalablement positionné sur un buchner. Le séchage est ensuite réalisé dans une enceinte sous vide primaire.

Après évaporation complète de l'alcool, l'ensemble filtre + poudre métallique est pesé et, connaissant la masse du filtre, on en déduit celle de la poudre. A l'issue du traitement, la masse d'alliage hydrurable extraite des 300 g de déchets initiaux est de :

$$m_{récup}\cdot = 280,35 \text{ g}$$

La masse d'alliage présente à l'origine dans le déchet était de :

$$m_{totale} = 300 \text{ x } 0,975 = 292,50 \text{ g}$$

Le taux de récupération est donc de :

$$\eta = \frac{m_{récup.}}{m_{totale}} = 95,8 \text{ \%}$$

Le dosage en résidus carbonés est effectué par dissolution de 5 g d'alliage par une solution d'acide nitrique 1 M, t = 50 °C. L'alliage est déposé sur un filtre papier préalablement pesé et placé sur un buchner. La solution acide est régulièrement versée par petite quantité sur la poudre. La composante métallique est dissoute et emportée à travers le filtre, laissant sur ce dernier les éléments carbonés (graphite et téflon). Après dissolution complète de l'alliage hydrurable, on détermine facilement la masse des résidus carbonés et on en déduit l'efficacité de la séparation :

$$\rho = \frac{(m_{récup.}\text{-}m_{résidus})}{m_{récup.}} = 99,7 \text{ \%}$$

La caractérisation de cet alliage a été effectuée en portant une attention particulière à l'étude des propriétés fonctionnelles (capacité électrochimique) et également de la distribution des tailles de particules (granulométrie). Ces caractéristiques sont comparées à celle d'un alliage hydrurable vierge de même composition (alliage jamais utilisé).

Caractérisation de l'alliage régénéré :

Capacité électrochimique :

La capacité électrochimique d'un alliage hydrurable caractérise son aptitude à stocker l'énergie électrique : c'est donc un paramètre fondamental. Sa détermination implique que soient réalisés des accumulateurs à partir des alliages à tester. La poudre d'alliage hydrurable est mélangée à de la poudre de Ni et pastillée pour former l'électrode négative. L'électrode positive est constituée à partir d'hydroxyde de Ni $\{Ni(OH)_2\}$. Les deux électrodes sont ensuite assemblées et plongées dans un électrolyte de KOH, 8 M.

Ces accumulateurs de test sont alors soumis à des cycles charge/décharge à courant constant. Par intégration des courbes de décharge, on déduit la capacité électrochimique de l'accumulateur qui est aussi celle de l'électrode négative si on a pris le soin d'utiliser une électrode positive de capacité très supérieure à celle de la négative-.

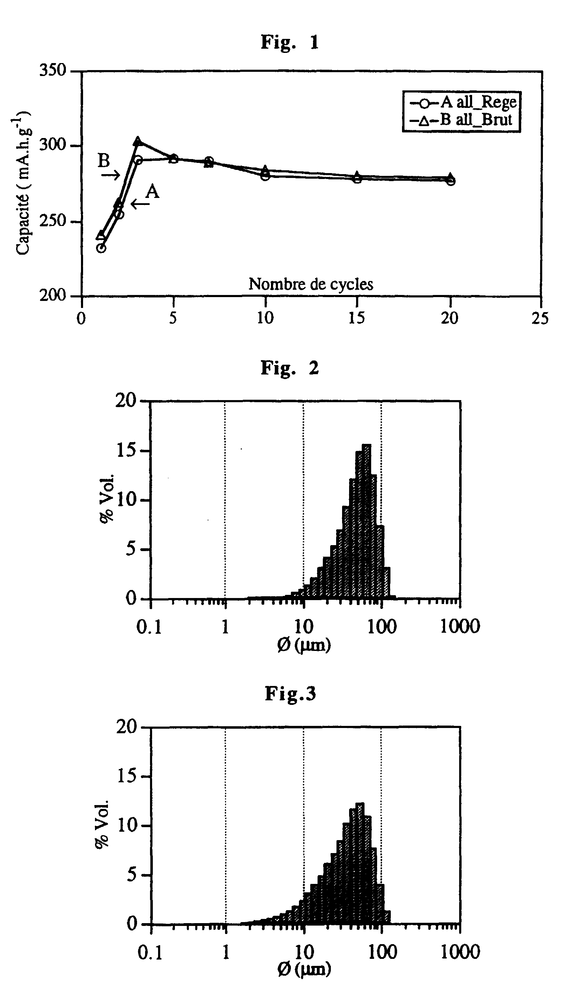

Les résultats de cette étude comparative sont présentés à la figure 1. Le comportement de la capacité est identique pour les deux alliages. La capacité de l'alliage régénéré (courbe A) est sensiblement identique à celle de l'alliage vierge (courbe B).

Granulométrie :

Les courbes de répartition granulométrique des alliages régénérés et vierges sont données respectivement aux figures 2 et 3. On constate que le procédé de traitement du déchet a modifié la granulométrie de l'alliage. La diminution de la proportion des particules de diamètre inférieur à 10 μm dans la poudre régénérée est évidente. Cette modification est un point positif puisque les petites particules ($\phi$ < 10 μm) vieillissent plus rapidement que les autres au cours de la vie de l'accumulateur.

EXEMPLE 2 :

Régénération d'un déchet "Varta" (marque déposée) :

Le produit traité dans cet exemple renferme environ 90 % en masse d'alliage hydrurable. La procédure suivie pour traiter 300 g de déchet dans 900 ml d'eau est identique à celle de l'exemple précédent à la seule différence que la solution des tensio-actifs ne contient que du "Zonyl" à la même concentration (11,25 g dans 500 ml de solution). Le rapport pondéral solide/liquide est toujours de 1/3 alors que le rapport pondéral tensioactif/déchet n'est plus que de $1,5.10^{-3}$ (addition de 20 ml de sol. de "Zonyl" au mélange 300 g déchets + 900 ml d'eau).

La détexturation et la dispersion sont obtenues à l'aide du même dispositif que précédemment après un traitement de 7 min à 5 000 tr.min$^{-1}$. La suspension ainsi obtenue est de couleur noire et il se forme à sa surface une mousse constituée d'une forte proportion de PTFE. On note également la présence dans cette mousse de particules d'alliage hydrurable. On utilise la pulvérisation d'eau pour laver ces mousses, cependant une partie de la poudre métallique est perdue lors de l'évacuation de l'eau. A ce stade, la majorité du PTF a été éliminée.

Le traitement se poursuit par les cycles de traitement ultrasonore/sédimentation tout comme dans l'exemple 1 : traitement ultrasonore de 5 min du mélange déchet + eau + tensio-actif, sédimentation de 12 min et pompage du liquide. Cette opération est effectuée onze fois. Aucune différence n'est observée par rapport à l'exemple précédent.

L'alliage recueilli est lavé à l'eau (trois fois) puis à l'éthanol (deux fois) avant d'être récupéré sur un filtre papier. Le séchage est effectué sous vide primaire.

Par pesée, on détermine le taux de récupération pour ce type de déchet :

$$\eta = \frac{m_{récup.}}{m_{totale}} = 82 \ \%$$

La teneur en résidus carbonés est mesurée sur un échantillon de 5 g par dissolution de la composante métallique par une solution acide $HNO_3$ 1 M, t = 50 °C (idem que précédemment). L'efficacité de séparation du procédé utilisé est donc :

$$\rho = \frac{(m_{récup.} - m_{résidus})}{m_{récup.}} = 99,8 \ \%$$

Caractérisation de l'alliage régénéré :

Capacité électrochimique :

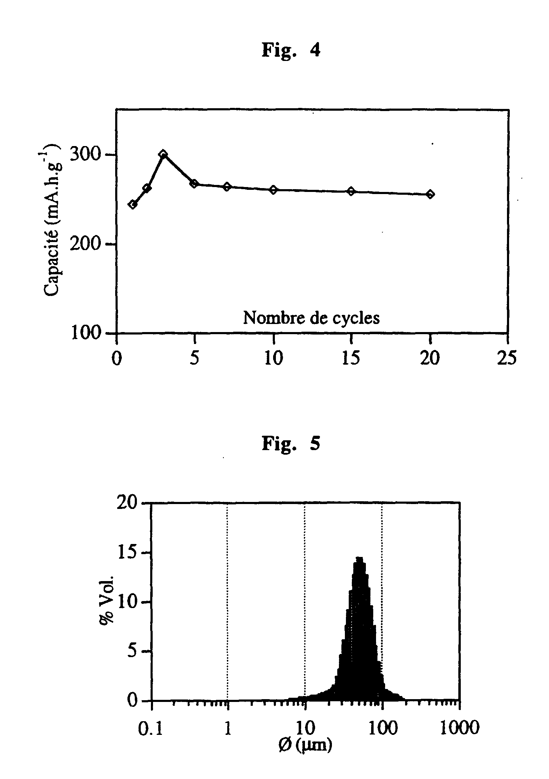

On a réalisé des accumulateurs à partir de l'alliage régénéré et on leur a fait subir des cycles charge/décharge. Le comportement de la capacité électrochimique de ces accumulateurs en fonction du nombre de cycles est reporté sur la figure 4. On ne possède pas d'échantillon d'alliage vierge correspondant et -une comparaison rigoureuse n'est donc pas possible. Cependant, la différence de composition entre l'alliage étudié dans cet exemple et le précédent étant faible, on peut raisonnablement penser que l'incidence sur les propriétés électrochimiques est négligeable. Sur la figure 4, on observe que le comportement de la capacité électrochimique est similaire à celui mis en évidence pour l'étude des produits "Saft" (figure 1). La valeur maximale de ce paramètre est de 300 mA.h.g$^{-1}$, identique à celle d'un alliage vierge de composition très voisine.

## Granulométrie :

La distribution des tailles de particules de l'alliage régénéré est présentée sur la figure 5. Elle est symétrique, très resserrée et on constate qu'elle est centrée sur une valeur moyenne inférieure à 50 µm. Ce type de distribution répond parfaitement aux contraintes fixées par les fabricants d'accumulateurs :

- pas de particules de $\phi < 10$ µm,
- une distribution très resserrée autour d'une valeur moyenne de 45 µm.

## EXEMPLE 3 :

## Régénération d'un déchet "Varta" (marque déposée) :

Le déchet est du même type que celui visé dans l'exemple 2 et les quantités de déchets traités, d'eau et de tensio-actifs sont également identiques.

La détexturation est toujours obtenue au moyen du dispositif de pulvérisation "Ultra Turrax T50" après un traitement de 7 min à 5000 tr.min⁻¹ . Après sédimentation, on procéde à l'évacuation de l'eau.

Le traitement se poursuit dans cet exemple par des cycles agitation mécanique/sédimentation. Cette agitation mécanique est réalisée par une tige équipée de pales et mise en rotation par un moteur électrique à la vitesse de 400 tr.min⁻¹. On procéde ainsi à une agitation de 5 min du mélange déchet + eau + tensio-actifs, suivie d'une sédimentation de 12 min et pompage du liquide. Onze cycles sont réalisés.

Le protocole de lavage et séchage décrit dans l'exemple 2 est conservé.

La poudre obtenue est ensuite tamisée pour en extraire les particules organiques résiduelles les plus grosses ($\phi \geq 150$ µm). Un dispositif de tamisage du type "RETSCH KS 1000" imprime un mouvement de translation circulaire à la vitesse de 200 tr.min⁻¹ à un ensemble de tamis dont les dimensions de mailles en µm sont les suivantes : 280, 200, 160, 100, 80 et 71. Les particules d'alliages sont récupérées sur les trois derniers tamis et au fond de l'ensemble de tamisage.

A l'issue de ce traitement, on détermine comme précédemment, par gravimétrie, les deux paramètres $\eta$ (taux de récupération) et $\rho$ (efficacité de séparation) :

$$\eta = \frac{m_{récup.}}{m_{totale}} = 84\%$$

$$\rho = \frac{m_{récup.} - m_{résidus}}{m_{récup.}} = 99,85\ \%$$

## Caractérisation de l'alliage régénéré :

La capacité électrochimique et la granulométrie de l'alliage régénéré sont sensiblement identiques à celles obtenues dans l'exemple 2 (cf. fig. 4 et 5).

## Revendications

1. Procédé de traitement de déchets contenant un ou des alliages hydrurables en vue de leur recyclage, lesdits déchets provenant en particulier de la fabrication de batteries de type nickel/hydrures métalliques ou de batteries usagées du même type, ledit procédé de traitement étant caractérisé en ce qu'il combine :

   (a) une étape de pulvérisation des déchets dans un milieu aqueux tensioactif, consistant :

   - à mélanger les déchets avec de l'eau en présence d'au moins un tensioactif,
   - à soumettre la suspension obtenue à une action de détexturation et dispersion, en l'amenant à passer entre deux pièces contiguës en mouvement relatif de rotation l'une par rapport à l'autre, lesdites pièces étant pourvues de fentes de passage de la suspension,

   (b) une étape de sédimentation de la suspension issue de l'étape (a) pour en séparer la phase solide,
   (c) des cycles successifs d'agitation et de sédimentation, chaque cycle consistant :

   - à mélanger la phase solide particulaire issue de l'étape de sédimentation (b) ou de l'étape de sédimentation du cycle précédent, avec de l'eau en présence d'au moins un tensioactif,
   - à soumettre la suspension obtenue à une agitation du milieu,
   - à laisser sédimenter la suspension obtenue et à en séparer la phase solide particulaire,

   (d) une étape finale de lavage à l'eau et de séchage de la phase solide particulaire issue des cycles (c).

2. Procédé de traitement selon la revendication 1, caractérisé en ce que l'action de détexturation et dispersion est réalisée en amenant la suspension à passer, pendant une durée comprise entre 1 minute et 10 minutes, entre deux pièces en rotation relative l'une par rapport à l'autre telle que la vitesse linéaire relative de l'une par rapport à l'autre soit comprise entre 5 m/s et 15 m/s.

3. Procédé de traitement selon l'une des revendications 1 ou 2, dans lequel l'action de détexturation et dispersion est réalisée en aspirant la suspension dans un rotor tournant et en la refoulant dans le sens centrifuge à travers les fentes d'un stator périphérique.

4. Procédé de traitement selon la revendication 3, caractérisé en ce que, lors de l'étape de pulvérisation (a), on mélange les déchets avec de l'eau et un tensioactif de façon que le rapport pondéral matière solide/phase liquide soit compris entre 0,1 et 1, et que le rapport pondéral tensioactif/déchets soit compris entre $10^{-4}$ et $5.10^{-3}$.

5. Procédé de traitement selon l'une des revendications 1 à 4, caractérisé en ce que, à chaque cycle (c), on mélange la phase solide avec de l'eau et un tensioactif de façon que le rapport pondéral matière solide/phase liquide soit sensiblement compris entre 0,1 et 1, et que le rapport pondéral tensioactif/ phase solide soit compris entre $10^{-4}$ et $5.10^{-3}$.

6. Procédé de traitement selon l'une des revendications 1 à 5, caractérisé en ce que à chaque cycle (c), la suspension est soumise à une vibration ultrasonore, combinée à l'agitation du milieu.

7. Procédé de traitement selon la revendication 6, caractérisé en ce que, à chaque cycle (c), on soumet, pendant une durée sensiblement comprise entre 1 minute et 10 minutes, la suspension à une vibration ultrasonore telle que la densité énergétique moyenne au coeur de la suspension soit sensiblement comprise entre 10 et 20 W.l$^{-1}$.

8. Procédé de traitement selon l'une des revendications 6 ou 7, dans lequel à chaque cycle (c) on soumet la suspension à une vibration ultrasonore de fréquence sensiblement comprise entre 30 et 60 kilohertz.

9. Procédé de traitement selon l'une des revendications 6, 7 ou 8, dans lequel à chaque cycle (c), on soumet la suspension à une vibration ultrasonore combinée à une agitation mécanique adaptée pour engendrer un brassage d'homogénéisation du milieu.

10. Procédé de traitement selon l'une des revendications 1 à 9, caractérisé en ce que l'on soumet la suspension à un nombre de cycles successifs d'agitation et de sédimentation sensiblement compris entre 10 et 30.

11. Procédé de traitement selon l'une des revendications 1 à 10, caractérisé en ce que (d) après plusieurs lavages à l'eau, on sèche le produit en réalisant un rinçage au moyen d'un solvant volatile miscible avec l'eau et en assurant une évaporation sous vide du liquide.

12. Procédé de traitement selon l'une des revendications 1 à 11, caractérisé en ce que (e) on intercale entre les lavages à l'eau une étape de traitement acide adaptée pour décaper les particules en surface.

13. Procédé de traitement selon l'une des revendications précédentes, dans lequel on soumet le produit obtenu après séchage à un tamisage adapté pour en extraire les particules organiques de taille supérieure ou égale à 150 µm.

**Claims**

1. Method for processing scrap containing one or more alloys which can form hydrides with a view to recycling them, the said scrap coming in particular from the manufacture of batteries of the nickel/metal hydride type or spent batteries of the same type, the said processing method being characterized in that it combines:

(a) a stage in which the scrap is pulverized in an aqueous surface active medium, consisting of:

. mixing the scrap with water in the presence of at least one surfactant,

. subjecting the suspension obtained to a detexturizing and dispersing action, by causing it to pass between two contiguous parts moving in rotation relative to each other, the said parts being provided with slits for the passage of the suspension,

(b) a stage in which the suspension resulting from stage (a) is allowed to settle so as to separate the solid phase,

(c) successive agitation and sedimentation cycles, each cycle consisting of:

. mixing the solid particulate phase resulting from the sedimentation stage (b) or from the sedimentation stage of the previous cycle, with water in the presence of at least one surfactant,

. of subjecting the suspension obtained to agitation of the medium,

. allowing the suspension obtained to settle and separating the particulate solid phase,

(d) a final stage of washing with water and drying the solid phase derived from the cycles (c).

2. Processing method according to claim 1, characterized in that the detexturizing and dispersing action is carried out by causing the suspension to pass, over a period of between 1 minute and 10 minutes, between two parts moving in rotation relative to each other, such that the relative linear speed of one in relation to the other is between 5 m/s and 15 m/s.

3. Processing method according to either of claims 1 or 2, wherein the detexturizing and dispersing action is carried out by aspirating the suspension into a rotating rotor and by forcing it in the centrifugal direction through slits in a peripheral stator.

4. Processing method according to claim 3, characterized in that, during the pulverizing stage (a), the scrap is mixed with water and a surfactant so that the weight ratio of solid matter/liquid phase is between 0.1 and 1, and in that the weight ratio of surfactant/scrap is between $10^{-4}$ and $5.10^{-3}$.

5. Processing method according to one of claims 1 to 4, characterized in that, in each cycle (c), the solid phase is mixed with water and a surfactant so that the weight ratio of solid matter/liquid phase is substantially between 0.1 and 1, and in that the weight ratio of surfactant/solid phase is between $10^{-4}$ and $5.10^{-3}$.

6. Processing method according to one of claims 1 to 5, characterized in that, at each cycle (c), the suspension is subjected to an ultrasonic vibration, combined with agitation of the medium.

7. Processing method according to claim 6, characterized in that, at each cycle (c), the suspension is subjected to an ultrasonic vibration, over a period substantially between 1 minute and 10 minutes, such that the mean energy density within the suspension is substantially between 10 and 20 W.l$^{-1}$.

8. Processing method according to either of claims 6 or 7, wherein, at each cycle (c) the suspension is subjected to an ultrasonic vibration having a frequency substantially between 30 and 60 kilohertz.

9. Processing method according to one of claims 6, 7 or 8, wherein in each cycle (c), the suspension is subjected to an ultrasonic vibration combined with mechanical agitation designed to produce homogenization through stirring the medium.

10. Process according to one of claims 1 to 9, characterized in that the suspension is subjected to a number of successive agitation and sedimentation cycles substantially between 10 and 30.

11. Process according to one of claims 1 to 10, characterized in that (d) after several washings with water, the product is dried by rinsing it with a volatile water miscible solvent and by evaporating the liquid under vacuum.

12. Process according to one of claims 1 to 11, characterized in that (e) an acid treatment stage is inserted between the water washings, designed to pickle the particles on the surface.

13. Process according to one of the preceding claims, wherein the product obtained is subjected after drying to sieving designed to extract organic particles having a size greater than or equal to 150 µm.

**Patentansprüche**

1. Verfahren zur Aufbereitung von hydrierbare Metalllegierungen enthaltenden Abfällen zu deren Wiederverwertung, wobei die genannten Abfälle insbesondere von der Herstellung von Batterien des Nikkel/Metallhydridtyps oder von gebrauchten Batterien. desselben Typs stammen, wobei das genannte Aufbereitungsverfahren dadurch gekennzeichnet ist, daß es folgende Schritte kombiniert:

(a) einen Schritt der Pulverisierung der Abfälle in einem wäßrigen Tensidmedium, bestehend aus:

Mischen der Abfälle mit dem Wasser in Anwesenheit von wenigstens einem Tensid,

Unterziehen der erhaltenen Suspension einem Detexturierungs- und Dispergierungsvorgang und Durchleiten derselben zwischen zwei benachbarten, relativ zueinander rotierenden Teilen, wobei die genannten Teile mit Durchlaßschlitzen für die Suspension versehen sind,

(b) einen Schritt der Sedimentierung der Suspension aus Schritt (a) zum Abscheiden der festen Phase daraus,

(c) aufeinanderfolgende Rühr- und Sedimentationszyklen, wobei jeder Zyklus besteht aus:

Mischen der festen Partikelphase aus Sedimentationsschritt (b) oder aus dem Sedimentationsschritt des vorhergehenden Zyklus mit dem Wasser in Anwesenheit von wenigstens einem Tensid,

Unterziehen der erhaltenen Suspension einem Rührvorgang des Mediums,

Absetzenlassen der erhaltenen Suspension und Abscheidenlassen der festen Partikelphase,

(d) einen letzten Waschschritt im Wasser und Trocknen der festen Partikelphase aus den Zyklen (c).

2. Aufbereitungsverfahren nach Anspruch 1, dadurch gekennzeichnet, daß der Detexturierungs- und Dispergierungsvorgang beim Durchleiten der Suspension für eine Dauer von 1 bis 10 Minuten zwischen zwei relativ zueinander rotierenden Teilen auf eine solche Weise erfolgt, daß die relative lineare Geschwindigkeit des einen in bezug auf das andere zwischen 5 und 15 m/s liegt.

3. Aufbereitungsverfahren nach Anspruch 1 oder 2, bei dem der Detexturierungs- und Dispergierungsvorgang durch Ansaugen der Suspension in einen drehenden Rotor und Drängen derselben zentrifugal durch die Schlitze eines peripheren Stators erfolgt.

4. Aufbereitungsverfahren nach Anspruch 3, dadurch gekennzeichnet, daß während des Pulverisierungsschrittes (a) die Abfälle mit dem Wasser und einem Tensid so vermischt werden, daß das Gewichtsverhältnis zwischen fester Materie und Flüssigphase zwischen 0,1 und 1 und das Gewichtsverhältnis zwischen Tensid und Abfällen zwischen $10^{-4}$ und $5.10^{-3}$ liegt.

5. Aufbereitungsverfahren nach einem der Ansprüche 1 bis 4, dadurch gekennzeichnet, daß in jedem Zyklus (c) die feste Phase mit dem Wasser und einem Tensid so vermischt wird, daß das Gewichtsverhältnis zwischen fester Materie und Flüssigphase vorteilhafterweise zwischen 0,1 und 1 und das Gewichtsverhältnis zwischen Tensid und Festphase zwischen $10^{-4}$ und $5.10^{-3}$ liegt.

6. Aufbereitungsverfahren nach einem der Ansprüche 1 bis 5, dadurch gekennzeichnet, daß in jedem Zyklus (c) die Suspension Ultraschallvibrationen in Kombination mit dem Rühren des Mediums unterworfen wird.

7. Aufbereitungsverfahren nach Anspruch 6, dadurch gekennzeichnet, daß in jedem Zyklus (c) die Suspension für eine Dauer vorteilhafterweise zwischen 1 und 10 Minuten Ultraschallvibrationen unterzogen wird, so daß die mittlere Energiedichte im Kern der Suspension im wesentlichen zwischen 10 und 20 W.l$^{-1}$ liegt.

8. Aufbereitungsverfahren nach Anspruch 6 oder 7, wobei in jedem Zyklus (c) die Suspension Ultraschallvibrationen mit einer Frequenz vorteilhafterweise zwischen 30 und 60 Kilohertz unterzogen wird.

9. Aufbereitungsverfahren nach Anspruch 6, 7 oder 8, bei dem in jedem Zyklus (c) die Suspension Ultraschallvibrationen in Kombination mit mechanischem Rühren unterzogen wird, um ein Homogenisierungsmischen des Mediums zu erzeugen.

10. Aufbereitungsverfahren nach einem der Ansprüche 1 bis 9, dadurch gekennzeichnet, daß die Suspension einer Reihe von aufeinanderfolgenden Rühr- und Sedimentationszyklen, vorteilhafterweise zwischen 10 und 30, unterzogen wird.

11. Aufbereitungsverfahren nach einem der Ansprüche 1 bis 10, dadurch gekennzeichnet, daß (d) das Produkt nach mehreren Wasserwaschvorgängen durch Spülen mit Hilfe eines flüchtigen, mit Wasser mischbaren Lösemittels unter Gewährleistung einer Verdunstung der Flüssigkeit unter Vakuum getrocknet wird.

12. Aufbereitungsverfahren nach einem der Ansprüche 1 bis 11, dadurch gekennzeichnet, daß (e) zwischen die Wasserwaschvorgänge ein Säurebehandlungsschritt geschoben wird, um Partikel von der Oberfläche abzulösen.

13. Aufbereitungsverfahren nach einem der vorherigen Ansprüche, wobei das erhaltene Produkt nach dem Trocknen gesiebt wird, um organische Partikel mit einer Größe von gleich oder größer 150 µm abzuscheiden.

## Fig. 1

## Fig. 2

## Fig.3

**Fig. 4**

**Fig. 5**